# EUROPEAN PATENT APPLICATION

(11) **EP 3 032 480 A1**
(43) Date of publication of application: **15.06.2016**
(21) Application number: 15199367.2
(22) Date of filing: 10.12.2015
(51) Int. Cl.: G06Q 30/00

(54) **BLINK CODE PRODUCT REGISTRATION**

(30) Priority: 11.12.2014 US 201414567260
(71) Applicant: Schneider Electric Industries SAS, 92500 Rueil-Malmaison (FR)
(72) Inventor: HARRIMAN, Merrill, Andover, MA 01810-1067 (US)
(74) Representative: Zerbi, Guido Maria

(57) **Abstract**

A system for registering an electronic device with a supplier of the electronic device may include the electronic device to be registered and a computing device capable of capturing a video of the electronic device. The electronic device may further include at least one LED device, wherein the electronic device may control the at least one LED device to communicate a blink code message using the at least one LED device. The computing device may capture a video of the blink code message and process the message to determine a product identifier associated with the electronic device. The product identifier may then be communicated to the supplier of the electronic device to be associated with a user account to complete the registration process.

## Description

### BACKGROUND

In many cases business organizations may desire customers to register purchased products to receive one or more different services related to the registered product, such as warranty registration and support services. In many cases, the product registration process may require a unique product identifier (e.g., a serial number) to be linked with the customer's account. Some product registration processes may require manual entry of the product identifier information, such as the serial number of the product, onto a paper registration form to be mailed to the product supplier and/or manufacturer

### BRIEF SUMMARY

Aspects of the present disclosure address one or more of the issues mentioned above by disclosing systems, devices, and methods. The following presents a simplified summary of the disclosure in order to provide a basic understanding of some aspects. It is not intended to identify key or critical elements of the invention or to delineate the scope of the invention. The following summary merely presents some concepts of the disclosure in a simplified form as a prelude to the more detailed description provided below.

In one embodiment in accordance with various aspects of the invention, a system for registering an electronic device with a supplier of the electronic device may include the electronic device to be registered and a computing device capable of capturing a video of the electronic device. The electronic device may further include at least one LED device, wherein the electronic device may control the at least one LED device to communicate a blink code message using the at least one LED device. The computing device may capture a video of the blink code message and process the message to determine a product identifier associated with the electronic device. The product identifier may then be communicated to the supplier of the electronic device to be associated with a user account to complete the registration process. In some cases, the electronic device may include a single-color LED device. In other cases, the electronic device may include a multi-color LED device.

Furthermore, a tangible computer-readable medium may store computer-executable instructions for causing a processor to perform various steps of methods disclosed herein. Such a processor may be located in a system performing one or more aspects of the invention.

### BRIEF DESCRIPTION OF THE DRAWINGS

The present disclosure is illustrated by way of example and not limited in the accompanying figures in which like reference numerals indicate similar elements and in which:
Figure 1 shows an illustrative system for registering a product using an LED blink code according to aspects of the present disclosure.
Figures 2A and 2B show illustrative systems for registering a product using an LED blink code according to aspects of the present disclosure.
Figure 3 shows illustrative representations of a product identification number according to aspects of the present disclosure.
Figures 4-7 show illustrative examples of LED blink codes communicated by a product during a product registration process according to aspects of the present disclosure.
Figures 8-10 show an illustrative process for registering a product using an LED blink code according to aspects of the present disclosure.
Figure 11 shows an illustrative computing device that may be used for capturing a blink code provided by the unregistered device according to aspects of the present disclosure.

### DESCRIPTION

In some cases, the product registration process may require entry of device and/or user information via a web interface. In an illustrative example, product registration information provided with the product may direct the user to a product registration website, where product information and/or user information may be manually entered. In many cases, a user account may be required before the product registration information may be entered. While these product registration methods may allow the business organization to register the products, customers may decide not to register the product due to one or more conditions that may make a product registration process to seem overly complex, time consuming or otherwise cumbersome. In some cases, a product registration processes may not accurately reflect either one or both of the customer information or the product information due to errors in entering the product identifier. Further, a customer may choose not to register the product because the serial number of the product may not be visible after the product has been installed.at the customer site.

In some cases, the product registration process may be facilitated by using visual identifiers, such as QR codes or bar codes to uniquely identify a product without requiring manual entry of a serial number. However, the QR code or bar code may not be visible on an installed device, or, in some cases, the QR code or bar code may only be visible following partial disassembly of the device. Further, a QR code may not be considered aesthetically pleasing, may be viewed as dated technology, and/or may use valuable space on a device chassis that may otherwise be used for displays, I/O devices, required labeling and/or the like.

In some cases, other technologies may be used to facilitate product registration, such as radio frequency identification (RFID) and/or near-field communication (NFC). However, such methods may be impracticable, if not impossible, in an industrial environment. For example, in a high electrical noise environment, such as an industrial facility, both RFID and NFC communication methods may be susceptible to electromagnetic interference so that a RFID or NFC reader device may need to be in close proximity to the device for successful communication. However, in an industrial environment, installed devices may not be easily accessible. For example, the devices may be installed or integrated with a machine and/or may be installed within an enclosure. Passive RFID and/or NFC communication may be facilitated using a portable device, such as a RFID reader, an NFC reader, a smart phone and/or the like. In many cases, the RFID and/or NFC antenna on the reader device (e.g., the smart phone), may require the installed device to be within a defined distance from the reader device, such as within a few millimeters. As such, the mechanical design of a machine may require the use of shields (e.g., a mechanical shield, an electromechanical shield, etc.), bezels and/or similar mechanical structures that may preclude use of such passive communication methods. In some cases, other wireless communication technologies (e.g., Bluetooth) may be used, but may often require an equipment re-design and/or additional hardware which would result in a corresponding increase in equipment costs.

In many electronic devices, LEDs may already be integrated into the design of a particular electronic device. These LEDs may be controlled by a microcontroller, or other such processing device, to provide information to a user. For example, LEDs may be used for providing status information and/or fault information such as by blinking in a defined pattern and/or by being illuminated in a specified color. For example, a "normal" status condition may be indicated by one or more of illuminating a particular LED, by illuminating an LED in a particular color (e.g., green) and/or by controlling the LED to be illuminated constantly or by blinking at a specified rate (e.g., a "heart beat" LED blinking at a 1 second interval). Similarly, an error may be indicated by one or more of illuminating a different "error status" LED, by illuminating an LED in a different specified color (e.g., red, yellow, etc.), and/or by controlling an LED to blink in a specified pattern. For example, an error may be indicated by controlling the LED to blink in a pattern representative of a particular device status. In such cases, the LED may blink in a first pattern (e.g., long-short-long-short, etc.) to indicate a first device status, and may blink in a second pattern (e.g., long-long-short-short-short, etc.) to indicate a second device status. A user may view one or more controlled LEDs and may be able to interpret a current status condition of the electronic device.

In some cases, by controlling the operation of one or more LEDs, additional information, such as product information, status messages, etc. may be provided in a new and efficient manner. For example, a controller may be programmed to use and/or reuse existing LED and LED control algorithms to provide additional information to a user. In such cases, the LEDs may be controlled to provide information including product information that may be useful in product registration procedures, including, but not limited to, a device identifier (e.g., a serial number, a product number, a MAC identifier, etc.).

As discussed above, the electronic device may be programmed to indicate an error, or other status condition, using an LED state. However, in many cases, additional information regarding the status of the electronic device may be useful to the user. In such cases, the user may be required to have physical access to navigate to a parameter that may include further information about the status of the electronic device. In other cases, the user may remotely, or locally, connect to the electronic device to upload the information. However, in many such situations, specialized knowledge of the electronic device or electronic device parameters may be necessary to obtain the useful information. Further, specialized software may also be required to access the additional device information, such as a parameter system. In many cases, a user (e.g., a machine operator, a service technician, etc.) may not have access rights to access the desired information.

In some cases, blink codes that may be provided via a light source, such as an LED, may provide an easy to use, automatic method for registering a new device without requiring manual entry of a product identifier (e.g., the product serial number or being in close proximity of the device. In such cases, a device may be capable of being registered as long as the device is installed at a location allowing for near line-of-sight of the light source (e.g., within 2 feet, within 10 feet, etc.) of a registration device, such as a user's smart phone or other such portable device. Further, blink codes may be used to communicate additional device status information in an efficient manner to be interpreted locally by an application running on a user device (e.g., a smart phone, a tablet computer, a laptop computer, etc.) or may be captured locally and communicated to a remote location for analysis.

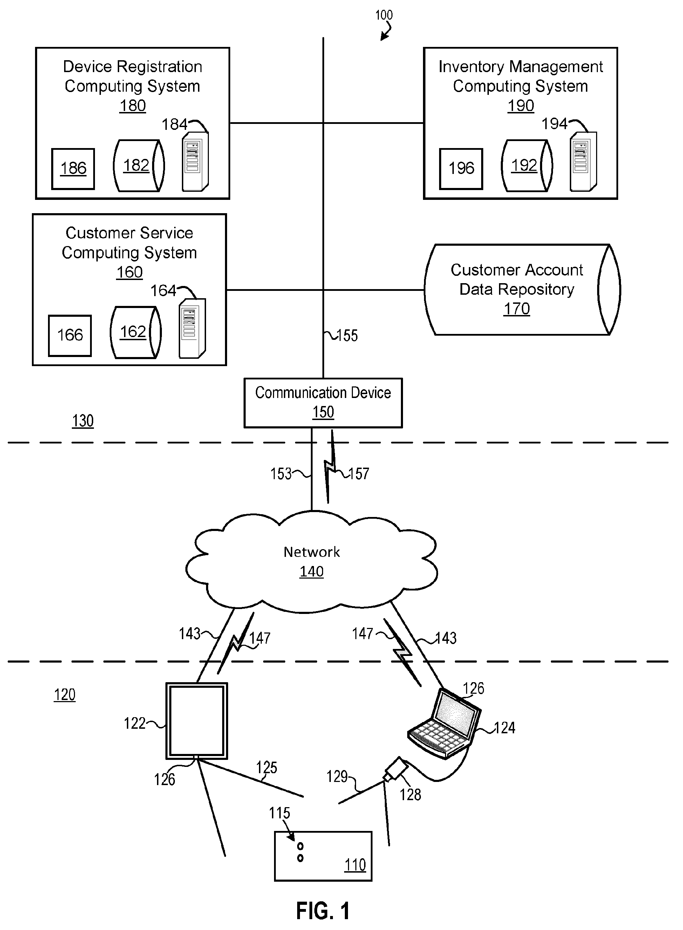

Fig. 1 shows an illustrative system 100 for registering an electronic device 110 using a blink code. The features of the illustrative embodiments described herein contemplate additional other embodiments comprising one or more, or a combination thereof, of the aspects described throughout.

The electronic device 110 of the system 100 may be located (e.g., installed) at a customer location 120. The electronic device 110 may include one or more LEDs 115 visible at the exterior of the electronic device 110. The electronic device 110 may include a processor (e.g., a microcontroller, a microprocessor, etc.) that may be configured to process instructions stored in a non-transitory memory device to control the operation of the one or more LEDs 115. In some cases, the instructions, when executed by the processor, may cause the electronic device 110 to communicate information (e.g., a product identifier, a device status, etc.) to a user. In some cases, the electronic device 110 may include a mechanism (e.g., a switch, a button, etc.) to cause the electronic device to communicated one or more of the device identifier or the status information in response to an operation of the mechanism. In other cases, the electronic device 110 may include a communication interface to communicate to external devices via a wired or wireless network.

In some cases, a user at the customer location 120 may use a computing device, such as a smart phone 122, a tablet computer, and/or a laptop computer 124 to capture an image of the electronic device to capture an electronic blink code communicated by the electronic device 110. For example, the smart phone 122 may include a video camera 126, or other light sensing device, to capture a video of the electronic device 110 such that the LEDs 115 are visible within a field of view 125 of the camera. Similarly, the laptop computer 124 may use a built in camera 126 or an external camera 128 to capture a video image of the operation of the LEDs 115 of the electronic device 110 within a field of view 129. The computing device 112, 124 process a software application, or may be otherwise programmed, to allow a user to capture the image of the LEDs 115 after a blink code may be initiated. Once captured, the smart phone 122 or laptop computer 124 may process the captured video image of the LEDs 115 to locally extract the information communicated in the blink code. In other cases, the smart phone 122 or laptop computer 124 may communicate the captured video image to a remote location, such as a vendor site 130, to be processed.

In an illustrative example, one or more devices installed at the customer location 120, such as the electronic device 110, may include one or more visual indicators (e.g., the LEDs 115, a LCD display, a light source, etc.) that is controllable by a microcontroller, to provide information to a user. For example, the LEDs 115 may be normally programmed to provide a visual indication of a device status of the electronic device. For example, a green LED state may indicate a "normal" or "run" state, and a red LED state may indicate an error state. In some cases, the microcontroller may be programmed to communicate further information via some sort of blink code (e.g., a series of on and off states) of the one or more LEDs 115.

The systems and methods discussed with at least some embodiments may use the LEDs 115, to provide an blink code that may be received by some sort of visible light detector, such as a video camera 126, 128, light sensor, or other such device. For example, as discussed above, the smart phone 122, or other such portable device (e.g., a tablet computer, the laptop computer 124, etc.) may be equipped with a video camera 126, 128. Image processing software within the imaging device may be programmed to process the blink codes and thereby interpret product identification information (e.g., a product identifier, a serial number, etc.) and/or other information associated with the installed device (e.g., a power on date and time, hours of operation information, etc.). This identification information may be sent, in turn, to a product registration system, such as one or more computing systems at the vendor site 130 via a communication network (e.g., network 140), such as a local area network (LAN), a wide area network (WAN), the Internet, a telecommunications network, etc. For example, the smart phone 122 and/or laptop computer 124 may be communicatively coupled to the network 140 via a wired 143 or wireless 147 communication link. Similarly, a vendor network 155 (e.g., a WAN, a LAN, etc.) may be communicatively coupled to the network 140 via a wired 153 or wireless 157 communication link via one or more communication devices, such as the communication device 150 (e.g., a router, etc.).

In some cases, the one or more computing systems at the vendor site 130 may be communicatively coupled via the vendor network 155 to form at least a portion of the product registration system. For example, the vendor site may include one or more of a customer service computing system 160, a device registration computing system 180, an inventory management computing system 190, and/or a customer account data repository 170 that may be communicatively coupled to one or more of the other computing systems 160, 180, 190.

In some cases, the inventory management system 190 may include at least one data repository 192, one or more computing devices 194 (e.g., servers, workstations, etc.) and/or one more user interfaces 196. In an illustrative example, the one or more computing devices 194 may be used to monitor a quantity of electronic devices that may comprise inventory to be sold or otherwise provided to customers. In many cases, each electronic device in inventory may be associated with a corresponding product identifier so that each particular electronic device may be identifiable from other such devices. The identifiers may include a product identifier (e.g. a serial number), a MAC identifier and/or the like. In many cases, each product identifier and/or information corresponding to the electronic device associated with a particular product identifier may be stored in the data repository and accessible via the user interface 196 and/or the vendor network 155.

In some cases, the vendor may use a computing system, such as the illustrative customer service computing system 160, to facilitate customer service activities, such as sales, service, support, or other such activities. In some cases, the customer service computing system 160 may include at least one data repository 162, one or more computing devices 164 (e.g., servers, workstations, etc.) and/or one more user interfaces 166. In an illustrative example, the one or more computing devices 164 may be used to facilitate creation of one or more customer accounts that may be stored in the data repository 162, the customer account data repository 170, or a combination of data repositories. For example, a customer service representative of the vendor may enter customer information via the user interface 166 and, based on the entered customer information, may cause the one or more computing devices 164 to generate a customer account based on the entered customer information. In another illustrative example, the user interfaces 166 may include one or more web interfaces that may allow a customer to remotely enter information and/or create a customer account based on the entered information. In some cases, the web page information may be stored in the data repository 162. Once created, the customer accounts and the associated information may be stored in the customer account data repository 170 so that the vendor may store information about customer purchases, service requests, and support requests. In many cases, such information may be useful to the vendor when designing products and/or services to be offered in a marketplace.

In some cases, the vendor may use a computing system, such as the illustrative device registration computing system 180, to facilitate device registration activities, such as for products (e.g., the electronic device 110) provided by the vendor. In some cases, the device registration computing system 180 may include at least one data repository 182, one or more computing devices 184 (e.g., servers, workstations, etc.) and/or one more user interfaces 186. In an illustrative example, device registration computing system 180 may be communicatively coupled to the network 140 to receive information about one or more products purchased by customers. For example, the device registration computing system may provide the one or more user interfaces 186 to facilitate a product registration process by a user (e.g., via a web interface), by a vendor employee (e.g., a customer service representative), and/or the like. In some cases, once completed a registered product may be associated by the one or more computing devices 184 with the appropriate customer service account, where product information may be stored in the customer account data repository 170.

In some cases, blink codes provided via an LED, or other source of illumination, may provide users with an easy to use, automatic method of registering a new device, without requiring the user to enter a unique device identifier and/or to have close physical access to the equipment. Instead the device may be located within a line-of-sight, or near line of sight, view of an imaging device (e.g., a video camera) or a light sensor (e.g., a photo-sensor) and within a specified distance (e.g., several feet, etc.), where a unique identifier may be communicated to a registration service automatically via a user device. For example, a registration service may provide a registration application that may be run on a user device, such as a smart phone, a tablet computer, a laptop computer, a desktop computer, and/or the like. The registration application may cause the user device to capture the blink code provided by the device to be registered. For example, a video camera associated with the user device may capture a video of the blink codes as communicated via one or more LED indicators. In some cases, the user device may include a photo-sensor (e.g., a photodiode, a photo-transistor, etc.) that may be used to capture the blink code by converting the light energy provided by the light source, such as the LED, into an electrical signal that may be processed and/or recorded.

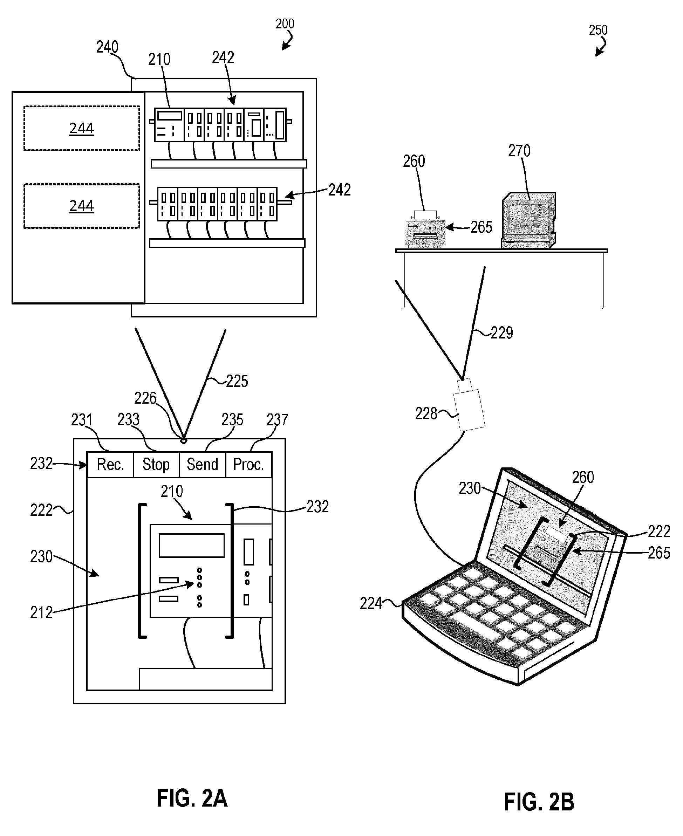

Figures 2A and 2B show illustrative systems 200, 250 for registering a product (e.g., electronic devices 210, 260, etc.) using an LED blink code according to aspects of the present disclosure. In an illustrative example, one or more devices 242, such as the electronic device 210, provided by the vendor may be installed at a customer site (e.g., the customer location 120). In the illustrative example, of FIG. 2A, the electronic device 210 (e.g., a PLC) may be installed individually, or with one or more other devices 242 (e.g., I/O devices, fieldbus devices, motor controllers, sensor devices, etc.) at an industrial facility, such as within a cabinet 240. In many cases, the electronic device 210 and/or electronic devices 242 may be installed using mounting hardware (e.g., DIN rail, screws, bolts, etc.) within the cabinet 240. Once installed (and wired), the electronic devices 240, 242 may be difficult to move and/or may be installed in such a manner that product identification information may not be easily accessible to a user. Many industrial products, such as PLCs, and PLC compatible devices (e.g., I/O devices, fieldbus communication units, motor controller units, sensor units, etc.) may include product information on a sticker or identification plate located in a location that may not be viewable once installed. For example, the product identification information may be located on the back or side of the electronic device 210, 242. As such, the product information may not be easily accessible to the user. Unless this information was recorded separately, product registration may be difficult to complete.

To facilitate product registration, the electronic device 210 may be programmed to communicate information, such as product registration information and product status information, via a blink code using one or more LEDs 212. As such, a user may capture the blink code via a camera 226 associated with a computing device (e.g., a tablet computer 222, the smart phone 122, the laptop computer 224, etc.). As discussed previously, the tablet computer 222 may capture a video image of the device 210 within a viewing angle 225 of a camera 226. In the illustrative example, the user may capture an image of the computing device 210 when a door of the cabinet 240 is opened. In other cases, the cabinet door may include one or more windows 244 that may allow viewing of one or more electronic devices 210, 242 without opening the door of the cabinet 240. Similarly, in another illustrative example, one or more electronic devices (e.g., a printer 260, a computer 270, etc.) may be located in a different environment, such as an office environment. In the illustrative system 250, a laptop computer 224 may be used to capture a video of a blink code communication communicated by the electronic device within a viewing area 229 of a camera 228.

In some cases, the tablet computer may process instructions to provide a software application for performing one or more of the steps of capturing a video image of the electronic device 210 to be registered, processing a captured image of the electronic device 210 to determine the information communicated via a blink code (e.g., the product identifier or device status of the electronic device 210, etc.) communicated by the electronic device 210, communicating the captured image of the electronic device 210 for remote processing, and/or communicating the determined product information to the vendor for association with a user account. In some cases, the user may be capable of entering or otherwise communicating, information about a customer account to be associated with the electronic device 210 during the registration process.

In the illustrative example, a product registration application may provide a screen 230 for capturing an image of the electronic device 210 to be registered. For example, the user may capture an image of at least a portion of the electronic device 210 within an area defined by brackets 234, where the LEDs 212 are within the area. In some cases, the application may provide one or more options to a user via a menu 232. For example, the user may select one or more options on the menu 232 via buttons, such as a record button 231, a stop button 233, a send button 235 and/or a process button 237 and/or the like. In the illustrative example, the user may begin a video capture of the blink codes provided by the electronic device 210 by selecting the record button 231 and stopping the video recording by using the stop button 233. In some cases, the user may desire to process the video of the blink code locally on the tablet computer 222. This processing may be triggered by the user by selecting the process button 237. Once processed, the user may send the information received from the electronic device 210 via the blink code to the vendor to complete the product registration process by selecting the send button 235. In some cases, the user may not process the blink code video locally and may send the video captured by the tablet computer 222 to the vendor for processing using the send button 235.

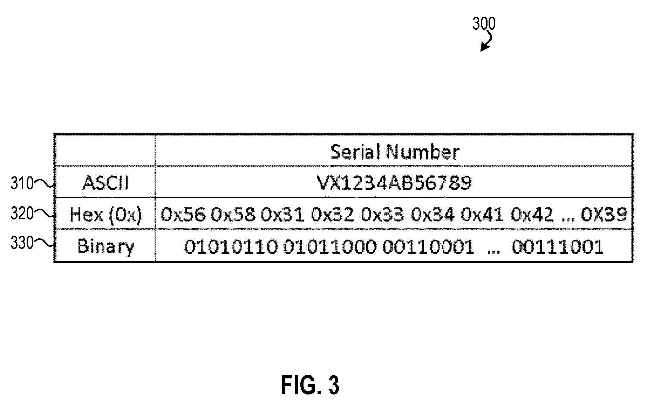

Figure 3 shows a table 300 including illustrative representations of a product identification number according to aspects of the present disclosure. In some cases, a product registration number may be defined using a plurality of alphanumeric characters, as shown in the illustrative American Standard Code for Information Interchange (ASCII) representation 310. In a computer environment, each alphanumeric character represented as ASCII characters may be represented as an 8-bit binary number, that may be commonly represented as an hexadecimal (Hex) code 320 and/or as a binary string 330. For example, a "V" may correspond to "0x56" in hexadecimal or "01010110" in binary, where the "0x" prefix is commonly used to identify a hexadecimal number.

Many, if not most, devices provide some form of LED indicator that may be controlled via a microprocessor, or other processing device, to provide some form of blink code. The systems and methods discussed herein may use these LED indicators to identify the device using via a user computing device, such as a smart phone or tablet computer. In some cases, the smart phone's embedded video camera may be used to capture a video image of the LED blink code. This video may be processed, such as by using an image processing software application, to identify the blink code and/or process the blink code to identify the communicated unique identifier of the electronic device. This identifier may be sent by the device via a different communication method to a remote registration service, such as via a network connection. The user computing device may separately send the unique identifier, along with additional information (e.g., user account information) so that the electronic device may be automatically linked to the user account. In an illustrative example, an on-state of an LED used to communicate the blink code may be indicated by illuminating the LED with visible light (e.g., red light, green light, etc.) or with non-visible light (e.g., infrared light, UV light, etc.). Further, a blink code may be captured by using a camera to capture video of the blink code and/or using one or more photo-detectors to capture the blink code. The captured blink codes may be stored in a memory device before analysis to determine the information (e.g., a product identifier, a status message) communicated by the electronic device.

In general, blink codes can be interpreted by the user computing device at a much faster rate than is possible by a human. For example, a typical smart phone may include a high resolution video camera capable of capturing video at least 20 frames per second. As such, multiple state changes may be detected per second (e.g., approximately 5 state changes, approximately 10 LED state changes, etc.).. For a unicolor LED, this may translate into a minimum of 5 bits of information per second. In another illustrative embodiment, a bi-color LED may be used, where a first color (e.g., orange) may be mapped to a '0' bit state and the different second color (e.g., green) may be mapped to a '1' bit state. In some cases, the LED off state may be defined as a byte delimiter. In such cases, data may then be able to be transferred at a minimum of 10 bits per second. In such cases, the identifier may be identified by performing image processing of the video image and mapping the LED blink pattern to a bit stream representative of the device identifier and/or any other relevant information, such as an initial power-on date and/or an operation time counter. In some cases, two or more blink codes may be communicated simultaneously, or nearly simultaneously. For example, a first blink code may correspond to a fast blink code visible to a camera, or other light sensing device, but is not recognizable to a human. A second blink code may correspond to a slower blink that may be visible to humans, cameras, and light sensing devices, alike.

In another illustrative embodiment, a multi-color LED may be used where a particular color may be mapped to represent a pre-defined bit-pattern. As before, a video image of the LED blink code may be captured using the camera and processed to determine the identifier. For example, a first color (e.g., green, etc.) may be mapped to a first bit pattern (e.g., '00', etc.), a second color (e.g., yellow, etc.) may be mapped to a second bit pattern (e.g., '01', etc.), a third color (e.g., red, etc.) may be mapped to a third bit pattern (e.g., '10', etc.), and a fourth color (e.g., orange, etc.) may be mapped to a fourth bit pattern (e.g., '11', etc.). In some cases, the off state of the multi-color LED may be used to represent a byte delimiter or one of the above-mentioned bit patterns. In such cases, the identifier may be identified by performing image processing of the video image and mapping the LED blink pattern to a bit stream representative of the device identifier and/or any other relevant information, such as an initial power-on date and/or an operation time counter.

In some cases, the device identifier may only be required to be unique during the registration process. In such cases, a random or otherwise contrived temporarily unique identifier (TUID) may be used to associate the registering device with the account information coming from the smart phone, or other such image capturing device. During the registration process the TUID and/or a globally unique identifier (GUID) may be passed by the electronic device to the registration service. Similarly, the video capturing device may transfer the same TUID that may be received via an LED blink code and a unique ID of the account information. The TUID may then be used to pair the device GUID to the user's account. The TUID then can be released to be used again in some future registration process by the same user or a different user. As such, the TUID is not required to be globally unique and may be defined as a shorter identifier string. For example, the length of the TUID may be a function of a number of simultaneous registrations and/or a duration of the registration process. In some cases, a collision of TUIDs may be encountered during a registration process for two different users. In such cases, this collision may be handled using an error handling process, such as where a first user may be processed initially, and a second user may receive an error message. As part of the error handling process, the second user may then re-transmit the registration information after a predetermined time duration, or in response to a user input.

In some cases, a user device may capture a video of a blink code generated by a device to be registered. In some cases, as discussed above, the user device may include an application to process the blink code and/or to otherwise facilitate the registration process. In other cases, the user device may capture the video, but not process the video to interpret the blink code. Instead, the user device may communicate the blink code video to another device, such as a registration server associated with the provider of the device to be registered. Once received at the registration server, the blink code video may be processed to determine a unique device ID associated with the device to be registered and associate the identified device with a user account.

In some cases, the LED blink codes may be used to communicate diagnostic information, status information, and environmental information of devices in the field. In many cases, diagnostic information may not be easily accessible to a user of the device. Further, due to constraints associated with each electronic device, an ability to easily obtain and/or disseminate diagnostic, status and/or environment information associated with electronic devices may be limited. For example, this information may be obtainable using a direct communication link with the electronic device but, as discussed above, not every user of the electronic device may be able to access the information with or without physical access to the device. However, by providing this information via a blink code communicated via one or more LED devices, the information may be captured and used for one or more equipment support services.

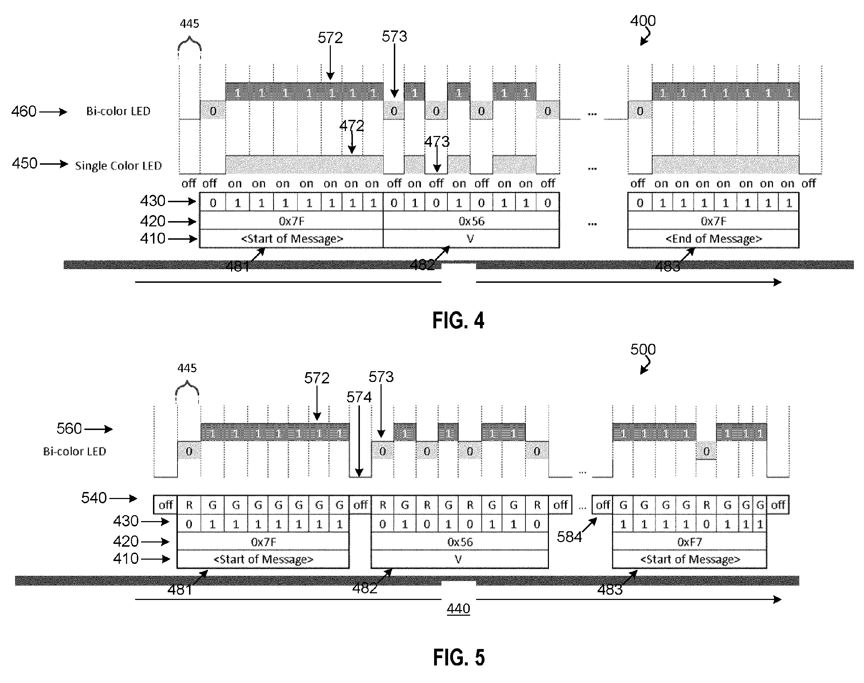

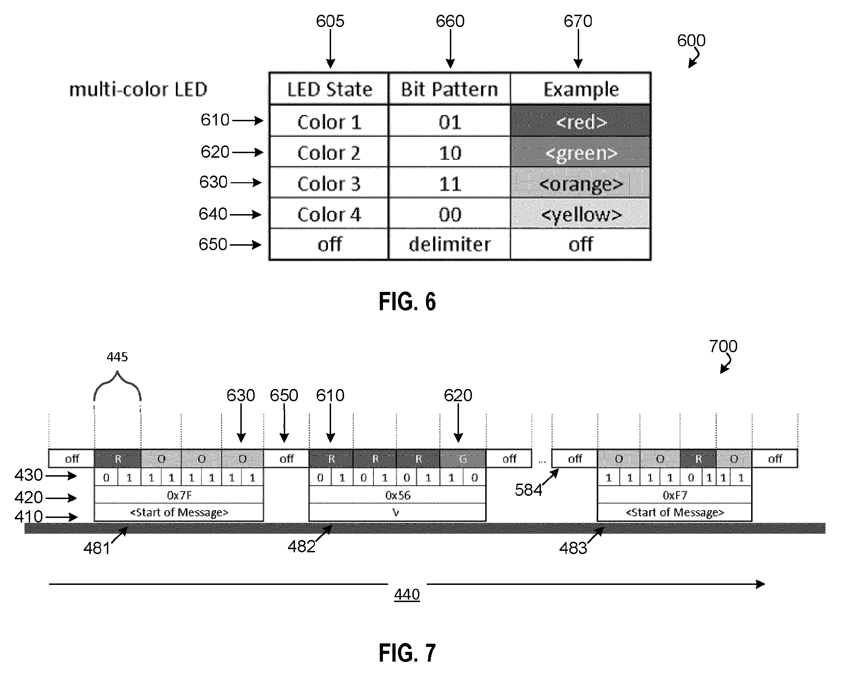

Figures 4-7 show illustrative examples of LED blink codes communicated by a product during a product registration process according to aspects of the present disclosure. For example, chart 400 illustrates a blink code message 410 communicated over time 440 using a single LED, such as a single color LED 450 and a bi-color LED 460. In the illustrative example, the single color LED 450 may use an "on" state 472 to represent a logical "1" and an "off" state 473 to represent a logical "0" over a particular time interval 445. Similarly, for a bi-color LED, a first color 572 (e.g., green, etc.) may be used to represent the logical "1", while a second color 573 (e.g., red, etc.) may be used to represent the logical "0". In some cases, as shown in chart 500, a third "off" state of the bi-color LED may be used as a delimiter between different characters of an ASCII string communicated via the blink code. As shown in the illustrative example of Figs. 4 and 5, the blink code may be configured to indicate a start of a blink code message using a start character 481 and to indicate an end to the blink code message using an end character 483, where the characters making the body of the message (e.g., character 482) may be indicated communicated over time by blinking the LEDs of the electronic device in a pattern to represent each character.

As discussed above, when a multi-color LED and/or multiple LEDs are available on the electronic device for blink code communication, multiple bits associated with each alphanumeric character of the blink code message may be communicated during each time interval 445. For example, in chart 600 an illustrative bit assignment is shown. Here, the multi-color LED has at least 3 colors available. For example, a first LED state 605 corresponding to a first color 610 (e.g., red) may be associated with a bit pattern 660, "01", a second LED state 605 corresponding to a second color 620 (e.g., green) may be associated with a bit pattern 660, "10", and a third LED state 605 corresponding to a third color 630 (e.g., orange) may be associated with a bit pattern 660, "11". In some cases, one or both of a fourth color 640 (e.g., yellow) and an "off" state may correspond to a fourth bit pattern 660 of "00". In other cases, the "off" state 484 may correspond to the fourth bit pattern 660 of "00". However, when a delimiter between characters is desired, the off state 650, or other color may be used as a delimiter between characters 481, 482, 483. In some cases, for single-color or multi-color LED devices, the delimiter may be defined as a "long on" or a "long off' state, where the "long on" state or the "long off" state comprises an appropriate state (on or off) held for two or more time intervals 445.

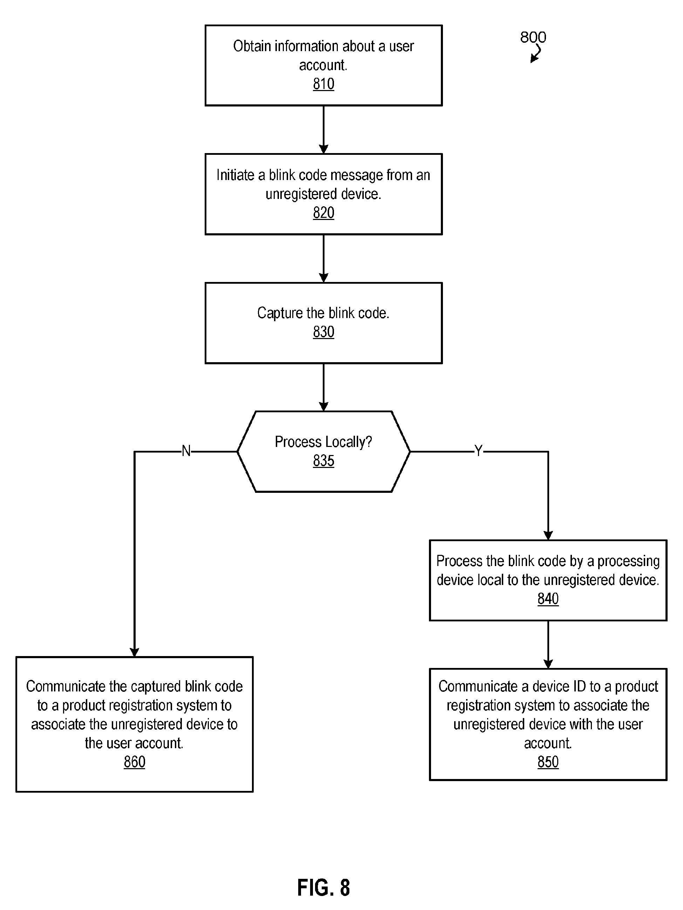

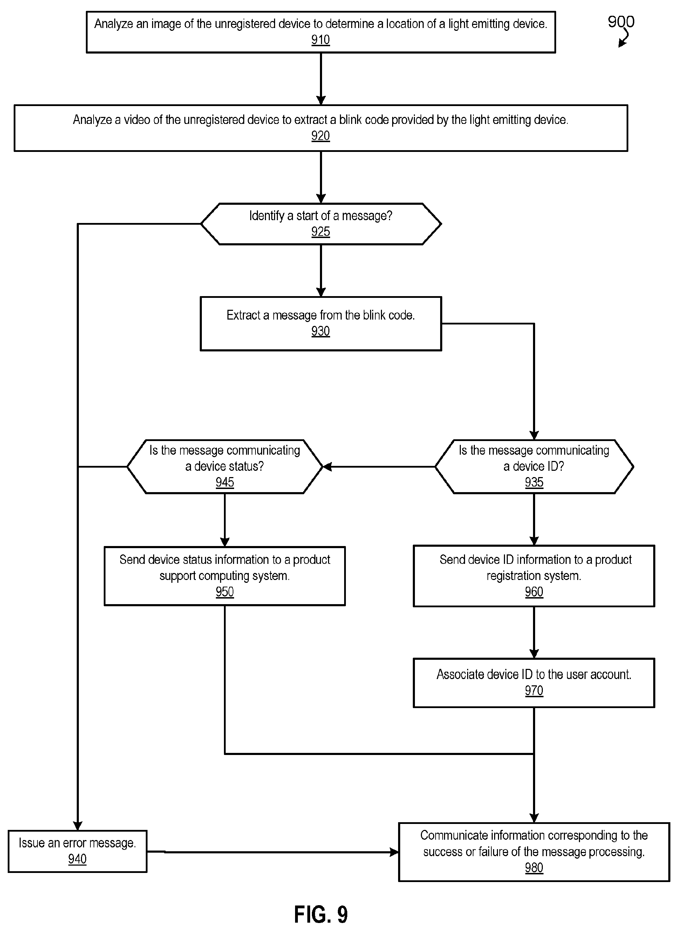

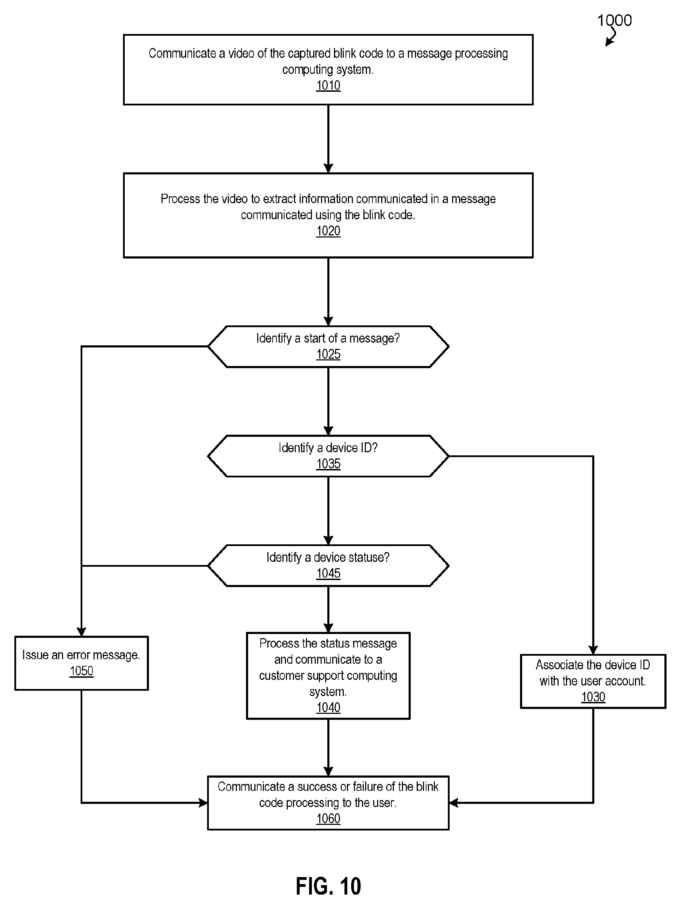

Figures 8-10 show an illustrative process for registering a product using an LED blink code according to aspects of the present disclosure. For example, during a product registration process 800, at 810 information about a user account may be obtained, such as by a product registration system. In some cases, based on user information a new user account may be created. In other cases, an existing user account may be located within a vendor computer system using information provided by the user. At 820, a blink code message may be initiated on the electronic device 110 to be registered. For example, the user may initiate the blink code manually using a switch or button accessible at the exterior of the electronic device 110. In other cases the blink code message may be initiated electronically via a message received by the electronic device 110. Still further, a device may be configured to communicate an identification blink code upon startup of the device (e.g., a power on event). In some cases, the device may always communicate the ID code at startup, or may be configured to communicate the ID code at startup based on a configuration setting that is configurable by a user. In some cases, the device may communicate the blink code upon startup until a registration process has been completed and recognized by the previously unregistered device. At 830, the blink code may be captured via an imaging device. For example, a user device, such as the tablet computer 222, the smartphone 122 and/or the laptop computer 124, may capture a video image of an LED of the electronic device 110 after the blink code has been initiated. At 835, user device, such as the tablet computer 222 may determine whether to process the video of the blink code locally or to send the video to an external location (e.g., the product registration system) for processing. If determined to communicate the captured blink code the product registration system for processing at 835, then the video of the blink code is communicated to the vendor for processing at 860. If, at 835, the video is to be processed locally, the blink code video is processed locally to the electronic device 110 to be registered, such as by the tablet computer 222. Once processed, an extracted device ID may be communicated to the product registration system of the vendor at 850.

In some cases, an image of an unregistered device may be analyzed to determine a location of a light emitting device at 910. In an illustrative example, the image of the unregistered device may be analyzed using a method for determining a location of one or more "landmarks" on an exterior surface of the device. As such, the method may include steps similar to those used in one or more analogous technologies, such as facial recognition technologies. For example, facial recognition technology, an image of a face may be analyzed to determine a location of a facial feature (e.g., an eye). Once an eye is located, a video associated with the analyzed image, may be further monitored for a movement associated with the eye, such as a blink. Similarly, one or more LEDs of an electronic device may be monitored to detect a "blink".

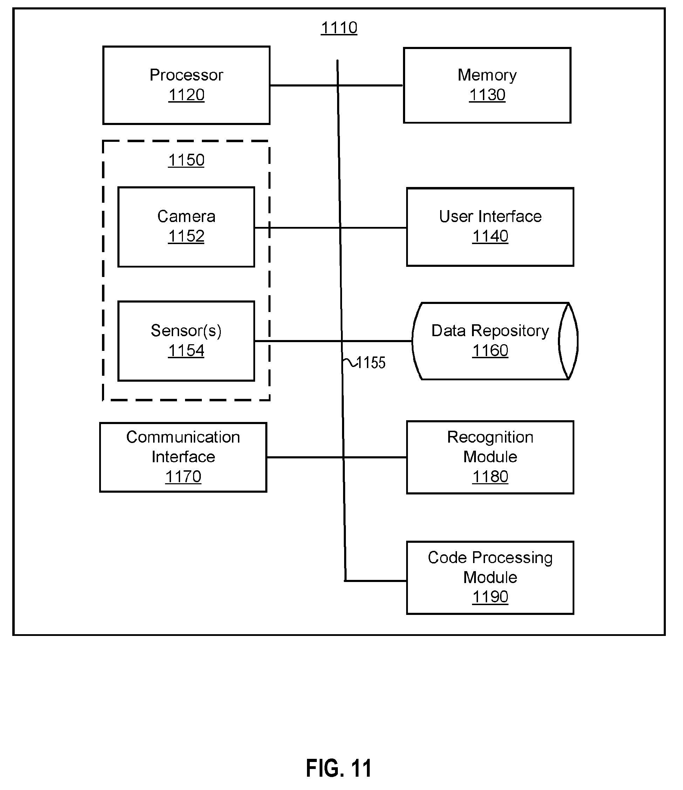

Figure. 11 shows an illustrative computing device 1110 (e.g., the smart phone 122, the tablet computer 222, the laptop computer 124, 224, etc.) that may be used for capturing a blink code provided by the unregistered device 110. As discussed above, the computing device 1110 may include one or more of a processor 1120, a memory 1130, a user interface 1140, a blink code capturing device 1150 (e.g., a camera 1152, a sensor 1154 such as a photo-detector, etc.), a communication bus 1155, a data repository 1160, a communication interface 1170, a recognition module, and a code processing module 1190. The processor 1120 may be configured to process instruction that may be stored in the memory 1130 to perform one or more of the methods discussed herein. The memory 1130 may be one or more of a RAM, a ROM, a flash memory and/or the like. The user interface may include one or more display devices (e.g., a LCD display, an LED display, a CRT display, a touchscreen display, etc.) and/or one or more I/O devices, such as a keyboard, a pointing device (e.g., a mouse, a touchpad, etc.). The user interface 1140 may include one or more user interface screens that may be displayed on a display device to facilitate capture and/or analysis of the blink code communicated by the unregistered device 110. The camera 1152 and/or the one or more sensors 1154 may be used to capture an image (e.g., a video image, one or more still images, etc.) of the unregistered device. A captured video, a series of still images, and the like may be stored in the data repository 1160, the memory 1130, or both. In some cases, the recognition module may be used to process an image (e.g., a still image, a video frame, etc.) to determine a location of a feature on the exterior of the unregistered device, such as an LED. Once a location of the LED has been identified, the video may be processed locally, such as by the code processing module 1190, to interpret the information being communicated by the unregistered device 110, such as a product identifier, a status message, a diagnostic message, and the like. In some cases, one or both of the recognition module 1180 and the code processing module 1190 may be incorporated into the operation of the processor 1120, a different processing device (e.g., a digital signal processor (DSP), a microcontroller, etc.), or a combination of the processor 1120 and one or more other devices.

In some cases, the recognition module 1180 may be configured to identify a location of one or more LED devices on the exterior of the unregistered device 110. For example, the recognition module 1180 may be capable of identifying one or more "landmarks" visible on the exterior of the unregistered device 110, such as a corner, an edge, a connector, etc. In some cases, the recognition module may be capable of identifying a feature of a color, or a change of color of the feature (e.g., an LED). For example, two or more images may be processed where a color change may be identified between at least two different images. In some cases, the color change may be associated with a "blink" of an LED transitioning from off to on, on to off, or from a first color to a second color. Based on the identified landmarks and/or the identified feature that changed color, the recognition module 1180 may determine a location of one or more LEDs on the exterior of the unregistered device 110. In some cases, the recognition module 1180 may determine a smaller area within the image to be monitored in which the LED may be located. The identifying of the location of an LED within the image, or at least a smaller area within the larger image, may improve the image processing efficiency of the code processing module 1190.

At 920, once a location of the LED is discovered, a video of the unregistered device 110 may be analyzed to extract a blink code as provided by the LED. If a start of a message is found at 925, a message may be extracted from the blink code at 930. Otherwise, an error message is generated 940 and communicated to a user at 980. Once the message has been extracted from the blink code, at 935, the message is examined to determine whether a device ID was communicated in the message. If so, the device ID may be sent to a product registration system at 960 and the device ID is then associated to the user account at 970 before communicating information corresponding to the success or failure of the blink code message is communicated to the user at 980.

Returning to 935, if the message does not communicate a device ID, the message may be analyzed to determine whether the message is communicating a device status at 945. If not, an error message may be generated at 940 and information corresponding to the success or failure of the blink code message is communicated to the user at 980. If, at 945, a device status has been identified, the device status information may be communicated to a vendor computer system, such as a product support computer system or a customer service registration system at 950 and then information about the success or failure of the blink code message is communicated to the user at 980.

Method 1000 illustrates a method of communicating a communicating a video of a captured blink code to a computer system for remote processing. For example, at 1010, a video of a captured blink code may be communicated to a message processing computing system from a video capturing device, such as a tablet computer, a smart phone and/or another computing device. Once received, at 1020, the video may be processed to extract information communicated in the message using the blink code. For example, the message may be processed such that a state of an LED device may be analyzed to determine whether a "1" or a "0" has been indicated for a particular time interval. Once extracted, the blink code may be analyzed to determine whether a start character is present indicating a start of a message 1025. If a start character is not found, an error may be issued at 1050 and the success or failure of the blink code processing at the remote location is communicated to the user at 1060, such as via the image capturing device. If, at 1025, a start of a message is found, the message may be analyzed to determine whether a device ID has been communicated 15 1035. If so, the device ID may be associated with a user account at 1030 and the success of the blink code processing is communicated to the user at 1060. If, at 1035, the message is determined not to identify a device ID, the message is analyzed to determine whether the message communicates a device status at 1045. If not, an error is generated at 1050 and communicated to the user at 1060. If, so, the device status message may be processed and communicated to a customer support computing system for further analysis at 1040 and the success of the blink code message is communicated to the user at 1060.

Although not required, one of ordinary skill in the art will appreciate that various aspects described herein may be embodied as a method, a data processing system, or as a computer-readable medium storing computer-executable instructions. For example, a computer-readable medium storing instructions to cause a processor to perform steps of a method in accordance with aspects of the disclosure is contemplated.

Aspects of the invention have been described in terms of illustrative embodiments thereof. The features of the embodiments described below contemplate other embodiments comprising one or more, or a combination thereof, of the aspects described throughout. Numerous other embodiments, modifications and variations within the scope and spirit of the appended claims will occur to persons of ordinary skill in the art from a review of this disclosure. For example, one of ordinary skill in the art will appreciate that the steps illustrated in the illustrative figures may be performed in other than the recited order, and that one or more steps illustrated may be optional in accordance with aspects of the disclosure.

## Claims

1. A system comprising:
an electronic device including at least one LED device;
an imaging device comprising:
a processor;
a video camera communicatively coupled to a memory device for storing a video of the electronic device and the at least one LED device;
a non-transitory memory communicatively coupled to the processor, the non-transitory memory device storing instructions that, when executed by the processor, cause the imaging device to:
capture, using the video camera, the video of the electronic device wherein the video includes a blink code message communicated by the electronic device using the at least one LED device; and
communicate, via a network, information corresponding to a product ID of the electronic device to a product registration system to register the electronic device to a user account.

2. The system of claim 1 wherein the electronic device communicates the blink code message in response to at least one of an activation of a physical mechanism on the electronic device and an application of power to the device.

3. The system of claim 1 wherein the electronic device communicates the blink code message in response to a message communicated to the electronic device via a network connection.

4. The system of claim 1, wherein the at least one LED device comprises a single LED device.

5. The system of claim 1, wherein the non-transitory memory device further storing instructions that, when executed by the processor, cause the imaging device to:
capture light emitted by the at least one LED device, wherein the captured light comprises visible light or non-visible light.

6. The system of claim 5, wherein the electronic device is configured to use a first color of the multi-color LED device to represent a logical "1" and to use a second color of the multi-color LED device to represent a logical "0".

7. The system of claim 6, wherein the multi-color LED device is configured use a delimiter between characters communicated in the blink code message, wherein the delimiter comprises an "off" state of the multi-color LED device.

8. The system of claim 6, wherein the multi-color LED device is configured use a delimiter between characters communicated in the blink code message, wherein the delimiter comprises a third color of the multi-color LED device.

9. The system of claim 5, wherein each color of the multi-color LED device corresponds to a bit pattern.

10. An apparatus comprising:
an imaging device comprising:
a user interface device;
a processor communicatively coupled to the user interface device;
a video camera communicatively coupled to a memory device for storing a video of the electronic device and the at least one LED device;
a non-transitory memory communicatively coupled to the processor, the non-transitory memory device storing instructions that, when executed by the processor, cause the apparatus to:
capture, using the video camera, the video of an electronic device wherein the video includes a blink code message communicated by the electronic device using at least one LED device; and
communicate, via a network, information obtained from the blink code corresponding to a product ID of the electronic device to a product registration system to register the electronic device to a user account.

11. The apparatus of claim 1 wherein instructions further cause the apparatus to begin capturing the blink code message in response to a capture command received via the user interface device.

12. The system of claim 10, wherein the product ID comprises a temporary ID used during a product registration process.

13. The system of claim 10, wherein the non-transitory memory device storing instructions that, when executed by the processor, cause the apparatus to:
analyze, by the processor, the blink code to determine at least one of the product ID of the electronic device and a status message corresponding to a status of the electronic device.

14. The system of claim 13, wherein the electronic device is configured to use a first color of the multi-color LED device to represent a logical "1" and to use a second color of the multi-color LED device to represent a logical "0".

15. A method comprising:
capturing, using a light sensing device, a blink code communicated by an electronic device using at least one LED;
analyzing, by a computing device, the blink code to determine a message included in the blink code, wherein the blink code is communicated at least at 5 state changes per second;
extracting, by the computing device, a product identifier associated with the electronic device; and
registering, by the computing device, the electronic device to a user account based on the product identifier extracted from the blink code message.
